# EUROPEAN PATENT APPLICATION

(11) **EP 2 216 741 A1**
(43) Date of publication of application: **11.08.2010**
(21) Application number: 10250195.4
(22) Date of filing: 05.02.2010
(51) Int. Cl.: G06Q 10/00

(54) **Financial inclusion card, system, and method for implementing**

(30) Priority: 05.02.2009 US 366012
(71) Applicant: JPMorgan Chase Bank, N.A., New York, NY 10036 (US)
(72) Inventor: Burras, Gerrard, Wilmslow Cheshire SK9 5BT (GB); Davidovac, Boog P., West Byfleet Surrey KT14 6PF (GB); Claire, Brian G., Lake Bluff, IL 60044 (US); Fellner, Debra, Glen Mills, PA 19342 (US)
(74) Representative: Hackett, Sean James

(57) **Abstract**

Embodiments of the invention are directed to a computer-implemented financial inclusion account system and method provided by a financial institution for facilitating payments between system participants, the system participants including account holder service recipients and eligible necessities service providers. The system includes at least one financial inclusion account maintaining funds for an account holder service recipient. The financial inclusion account includes a main account having a main account balance and at least one sub-account having a sub-account balance, the at least one sub-account storing funds for payment to at least one eligible necessities service provider. The system additionally includes withdrawal rules stored in a memory, the withdrawal rules including identification of approved debit requesters for withdrawing funds from the sub-account balance, the withdrawal rules requiring approved debit requesters to be debit requestors designated by the financial institution as eligible necessities service providers. The system additionally includes a withdrawal engine for accessing the stored withdrawal rules upon receiving a debit request, the withdrawal engine causing the sub-account balance to be debited if the debit requestor is an approved debit requestor according to the stored withdrawal rules.

## Description

### CONTINUING DATA

This application is a continuation-in-part application of U.S. Patent Application No. 10/011,971, filed on December 11, 2001.

### TECHNICAL FIELD

Embodiments of the invention are related generally to systems and methods for financial account administration and management.

### BACKGROUND OF THE INVENTION

In many countries, the government provides benefits to individuals having limited resources and allows these benefits to be used for payment of necessities. Currently, in some countries, the government sponsors accounts for benefits recipients, in which the government deposits funds to assist the benefits recipients with payments for necessities such as for example, utilities or food. The government sponsored accounts may be recharged on a regular basis, such as on a monthly basis.

An Electronic Benefit Transfer (EBT) system has developed and is currently being used in many states in the United States to issue food stamp and other benefits. In an EBT system, the benefits recipients may receive a plastic debit card for use at participating retailers. Food stamp benefits can be used only to purchase food items authorized by the USDA's Food Stamp program. Cash benefits may be used to purchase any item at a participating retailer, as well as to obtain cash-back or make a cash withdrawal from a participating ATM.

For example, in the food stamp program, food stamp recipients apply for their benefits in the usual way, by filling out a form at their local food stamp office. Once eligibility and level of benefits have been determined, information is transferred to the state's EBT contractor, an account is established in the participant's name, and food stamp benefits are deposited electronically in the account each month. A plastic debit card, similar to a bank card, is issued and a personal identification number (PIN) is assigned or chosen by the recipient to give access to the account.

When paying for groceries, the food stamp customer's card is run through an electronic reader or a point of sale terminal (POS), and the recipient enters the PIN to access the food stamp account. The processor electronically verifies the PIN and the account balance, and sends an authorization or denial back to the retailer. The recipient's account is then debited for the amount of the purchase, and the retailer's account is credited. Payment is typically made to the retailer through a settlement process at the end of the business day, such as by a direct debit request through an Automated Clearinghouse (ACH) transaction.

In the United States, direct debit usually means an ACH transfer from a bank account to a biller, initiated by the biller. Businesses are also increasingly using ACH to collect from customers online, rather than accepting credit or debit cards. Direct debiting allows an organization to instruct its bank to collect varying amounts directly from customers' accounts, using an electronic funds transfer.

Direct debits may be executed through the use of a debit card, or alternatively upon request by a biller having authorization from an account holder. The authorization may be for a single transaction or for multiple recurring transactions. Thus, service providers may instruct the service provider bank to collect an amount from the account of the benefit recipient through electronic funds transfer. The customer or benefits recipient may instruct his or her bank to honor debit notes from the service provider. Before a company can set up direct debits from its customers, it has to be authorized in order to prevent fraud and to ensure that the proper controls are in place. Companies wishing to use direct debits to collect customer payments may be granted an identification number. Direct debit payments may typically be set up via paper-based forms requiring a signature of the account holder, via telephone, or via the internet using an online application form.

Although direct debit arrangements may vary within countries and between different countries, organizations may be required to enter into a direct contract with their banks. The collecting organization may be required to present an authorization to the accountholder's bank, upon request. If the authorization cannot be presented, the direct debit transaction may not be honored.

Direct debit plans are beneficial to participating merchants as the merchants are guaranteed government payment for goods and services for which they might otherwise not be reimbursed. For benefits recipients in the UK, this direct debit currently is drawn from the government sponsored accounts. Thus, in some countries, benefits recipients authorize providers of the necessities, such as utility companies, grocers, or other merchants to transfer funding for the necessities from the government sponsored account to the provider account. In fact, in some countries, providers such as utility companies provide a discount to customers who execute payments through direct debit rather than through checking, credit, or other methods.

However, sponsoring such accounts results in additional burden and expense for governments. The government typically assumes all responsibility and expense for maintaining the accounts, and the individuals benefitting from the accounts have no similar responsibilities. Furthermore, in many countries, governments are minimizing benefits to individuals and therefore are encouraging individuals to take more responsibility.

Banking institutions have a desire to retain customers and funds and thus likewise have an interest in continued existence of these accounts holding funds for benefits recipients. However, simply providing accounts to benefits recipients does not guarantee that the utility companies and other necessities providers will be able to easily access the benefits funds.

If the government chooses to limit its involvement in providing financial benefits for payment of necessities by curtailing the provision of accounts and merely providing funds directly to recipients, then recipients would be forced to assume greater responsibility for financial management. However, for individuals living without excess available funds, minor errors in financial management can create major difficulties with respect to payment for essentials.

Accordingly, a solution is needed that will relieve government burden and transfer more account maintenance responsibility to individuals and/or providers of goods and services who benefit from secure and guaranteed payment from individuals receiving benefits. A solution is further needed that will facilitate management of funds by benefits recipients or other individuals having difficulty paying for basic necessities and minimize the expense to the individuals for these necessities.

### SUMMARY OF THE INVENTION

In one aspect of the invention, a computer implemented financial inclusion account system is provided by a financial institution for facilitating payments between system participants. The system participants include account holder service recipients and eligible necessities service providers. The system includes at least one financial inclusion account that maintains funds for an account holder service recipient, the financial inclusion account includes a main account having a main account balance and at least one sub-account having a sub-account balance. The sub-account stores funds for payment to at least one eligible necessities service provider. Withdrawal rules stored in a memory include identification of approved debit requesters for withdrawing funds from the sub-account balance. The withdrawal rules require approved debit requesters to be debit requestors designated by the financial institution as eligible necessities service providers. A withdrawal engine is provided for accessing the stored withdrawal rules upon receiving a debit request and the withdrawal engine causes the sub-account balance to be debited if the debit requestor is an approved debit requestor according to the stored withdrawal rules.

In another aspect of the invention, a computer-implemented financial inclusion account management method is provided by a financial institution for facilitating payments between system participants. The system participants include account holder service recipients and eligible necessities service providers. The method includes establishing at least one financial inclusion account maintaining funds for an account holder service recipient, the financial inclusion account including a main account having a main account balance and at least one sub-account having a sub-account balance. The sub-account stores funds for payment to at least one eligible necessities service provider. The method additionally includes storing withdrawal rules in a memory, the withdrawal rules including a listing of approved debit requestors wherein approved debit requestors have been designated by the financial institution as eligible necessities service providers. The method further includes accessing the stored withdrawal rules through the use of a withdrawal engine upon receiving a debit request. The withdrawal engine causes the subaccount balance to be debited if the debit requestor is an approved debit requestor.

In yet an additional aspect of the invention, a computer-implemented financial inclusion account system for facilitating payments between system participants is provided. The system participants include service recipients and eligible necessities service providers. The system comprises at least one financial inclusion account, the financial inclusion account including a main account having a main account balance and at least one sub-account having a sub-account balance. The sub-account stores funds for payment to at least one eligible necessities service provider. The system additionally includes a financial inclusion account management system for managing the at least one financial inclusion account. The management system comprises a withdrawal engine and a deposit engine. The deposit engine accesses stored deposit rules in order to determine a main balance deposit amount of a submitted deposit to credit to the main balance and a sub-account deposit amount of the submitted deposit to credit to the sub-account. The withdrawal engine comprises authorization components for consulting withdrawal rules to determine if a debit requester is an approved debit requestor for withdrawing funds from the sub-account. Each approved debit requestor is designated by the financial institution as an eligible necessities service provider. A withdrawal module is provided for executing withdrawal from the sub-account for approved debit requestor.

A computer-implemented financial inclusion account management method is provided for facilitating payments for approved services between system participants, the system participants including service recipients and approved necessities service providers. The account management method includes providing at least one financial inclusion account, the financial inclusion account including a main account having a main account balance and at least one sub-account having a sub-account balance, the at least one sub-account storing funds for payment to at least one approved necessities provider. The method further includes managing deposits and withdrawals to and from the financial inclusion account. The management of deposits includes storing deposit rules, and accessing the stored deposit rules upon receiving a deposit in order to determine a main balance deposit amount of a submitted deposit to credit to the main balance and a sub-account deposit amount of the submitted deposit to credit to the sub-account. The management of deposits additionally includes executing the stored deposit rules to credit the submitted deposit to at least one of the main balance and the sub-account balance. The management of withdrawals includes storing withdrawal rules for determining approval for executing withdrawals from the sub-account and consulting the withdrawal rules to determine if a debit requestor is an approved debit requester for withdrawing funds, wherein each approved debit requestor is designated by the financial institution as an eligible necessities service provider. The management of withdrawals additionally includes executing withdrawals from the sub-account for approved debit requestors.

### BRIEF DESCRIPTION OF THE DRAWINGS

The present invention is described in detail below with reference to the attached drawings figures, wherein:

FIG. 1 is a block diagram illustrating an operating environment for a financial inclusion account system in accordance with an embodiment of the invention;

FIG. 2 is a block diagram illustrating components of a financial inclusion account system in accordance with an embodiment of the invention;

FIG. 3 is a block diagram illustrating a deposit engine of the financial inclusion account system in accordance with an embodiment of the invention;

FIG. 4 is a block diagram illustrating a withdrawal engine of the financial inclusion account system in accordance with an embodiment of the invention;

FIG. 5 is flow chart illustrating a method for making deposits into a financial inclusion account in accordance with an embodiment of the invention;

FIG. 6 is a flow chart illustrating a method for paying direct debits from the financial inclusion account in accordance with an embodiment of the invention;

FIG. 7 is a diagram illustrating a stored withdrawal rule table in accordance with an embodiment of the invention;

FIG. 8 is block diagram illustrating a stored deposit rule table in accordance with an embodiment of the invention; and

FIG. 9 is a block diagram illustrating a service provider billing management system in accordance with an embodiment of the invention.

### DETAILED DESCRIPTION OF PREFERRED EMBODIMENTS

Embodiments of the present invention are directed to a financial inclusion account system for facilitating management of funds allotted for necessities as well as a method for efficiently reserving and providing the allotted funds to necessities providers. Embodiments of the invention have the technical effect of efficient maintenance and rapid and reliable electronic transfer of funds in order to relieve government burden and facilitate payments to necessities providers.

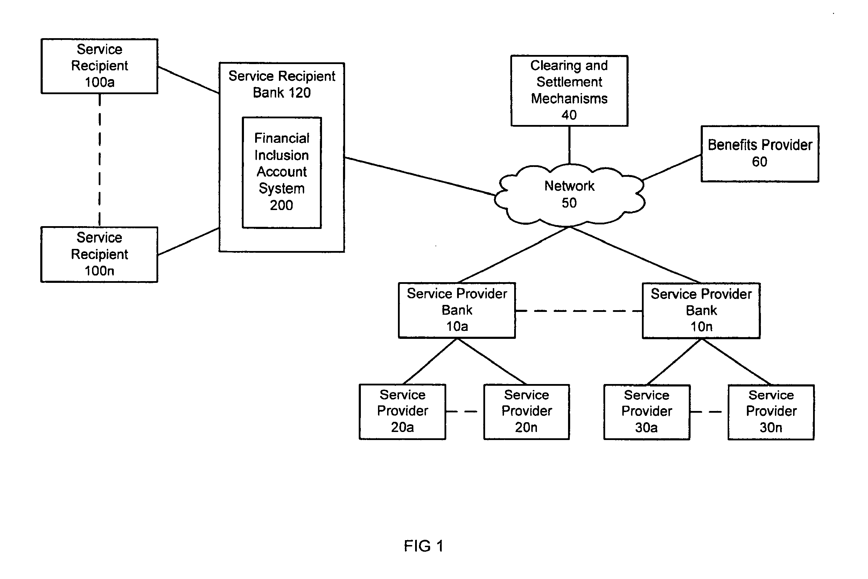

FIG. 1 is a block diagram illustrating an operating environment for a financial inclusion account system 200 in accordance with an embodiment of the invention. A service recipient financial institution 120 may be connected over a network 50 with service provider financial institutions 10a...10n. Each service provider financial institution may provide account services for multiple service providers 20a...20n and 30a...30n. Each service recipient financial institution 120 may provide financial services to service recipients 100a...100n. The financial inclusion account system 200 may be operated by the service recipient financial institution 120.

Additionally, one or more benefits providers 60 may have a relationship with the service recipients 100a...100n and/or service recipient financial institution 120. In embodiments of the invention, the benefits provider 60 may directly deposit funds into the financial inclusion account system 200. Alternatively, the benefits provider 60 may provide benefits directly to the service recipients 100a...100n so that the service recipients 100a...100n may deposit the benefits into their accounts. Although the benefits provider 60 is shown as connected over the network 50, the benefits provider 60 may access the benefits recipient in another manner, such as by mailing a paper check (or checque).

Clearing and settlement mechanisms 40 operate to facilitate direct debit requests. These clearing and settlement mechanisms 40 may enable ACH transactions over an electronic transfer network (ETN). An ACH entry starts with an account holder 100a...100n authorizing an originator or service provider 20a...20nto issue ACH debit or credit to an account. To execute an ACH transaction, the account holder 100a...100n then creates an ACH entry to be given to the service recipient financial institution 120. This ACH entry is then sent to an ACH Operator of the clearing and settlement mechanisms 40 and is passed on to the service provider financial institution 10a...10n, where the service provider's account is issued either a credit or debit, depending on the ACH transaction.

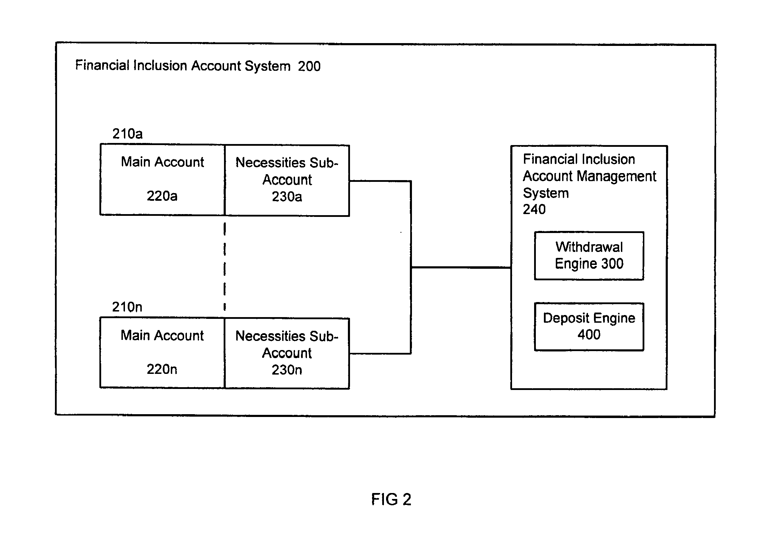

FIG. 2 is a block diagram illustrating components of a financial inclusion account system 200 in accordance with an embodiment of the invention. Service recipients 100a...100n may maintain financial inclusion accounts 210a...210n. Each account 210a...210n may include a main account 220 and a necessities sub-account 230. The provision of sub-accounts is discussed in co-pending U.S. Patent application No. 10/011,971, of which the present application is a continuation-in-part application. The description provided in the earlier application is incorporated herein by reference. The accounts 210a...210n may be operated by a financial inclusion account management system 240. The financial inclusion account management system 240 may include a withdrawal engine 300 and a deposit engine 400.

The financial inclusion accounts 210a...210n may resemble ordinary card based accounts but also have the sub-account 230 associated with them specifically for facilitating saving to pay bills, such as utility bills. In embodiments of the invention, on a regular basis, using pre-defined rules, either at pre-set times or as funds are credited to the main account 220a...220n, funds are transferred from the main balance into the sub-account balance, as will be further described below. This process gradually builds a fund to pay utility bills as they fall due.

The accounts 210 preferably maintain a main balance in the main account 220 that is generally accessible to the account holder and debit requestors authorized by the account holder. When an account holder makes a deposit or receives a deposit from another party without any specific designation, the received deposit will be credited to the main balance. Furthermore, any direct debit requests without specific authorization for retrieving funds from the sub-account will have its authorization verified to debit funds from the main account balance.

As will be further explained below, the necessities sub-account 230 receives funds as dictated by the account holder. Additionally, authorized debit requestors may execute direct debits from the necessities sub-account balance. For the necessities sub-account balance, only pre-determined necessities providers may be authorized to execute direct debits. In order to become authorized, the service recipient financial institution must first determine that the providers are eligible for authorization.

For example, while some providers, for example utilities providers and grocers, may eligible for authorization to execute a direct debit transaction from the necessities sub-account, other providers, such as cable television service providers will not be eligible for authorization as cable television is generally not considered a necessity. Utilities providers may for example include electric companies, gas companies, water and sewer providers, trash removal providers, and telephone service providers. However, this list is merely exemplary and may vary regionally in accordance with local needs and determinations.

If a financial institution determines that a provider is eligible to be included on a list of authorized service providers, the financial institution may require account maintenance fees to be covered by that provider in order to shift the cost from the individual account holders, who are typically individuals with limited resources. The amount of the fee may be determined by the financial institution and may for example be based on the number of accounts to which the eligible service provider obtains access for debit requests. Alternatively, each eligible service provider may be charged an identical fee. The fee may be assessed periodically, for example monthly or yearly. As a further alternative, the fee may be charged on a per debit basis.

Furthermore, each individual account holder may authorize only a subset of those eligible for authorization. "Eligibility" and "authorization" are two separate and distinct requirements for approval of the debit transaction. Eligibility settings are maintained by the financial institution and may be determined in a number of different ways. For example, the eligibility settings may be determined by the financial institution either independently, or in accordance with applicable regulations, or in cooperation with other entities, such as providers or local governments. As set forth above, eligibility determination will be linked to the type of service provided and whether such service qualifies as a necessity. "Authorization" is determined by account holders. Presumably, financial inclusion account holders would authorize direct debits from a financial inclusion sub-account only for entities actually providing the account holder with services. If an account holder does not receive services from providers having eligibility, the account holder will not grant authorization to those providers. Furthermore, financial inclusion account holders may prioritize such that only providers of certain necessities will receive authorization.

Additionally, the "authorization" provided by the account holder for executing a debit from the sub-account is separate and distinct from the general authorization that is typically required for execution of an ACH transaction. This general authorization merely entitles a debit requestor to execute a debit from an account holder's main account balance and not from the sub-account.

Thus, once an account holder has deposited money into the necessities sub-account, the funds in the sub-account are available to a small number of providers who are both eligible as determined by the service recipient financial institution, and authorized as determined by the account holder.

The financial inclusion accounts 210 are maintained in many cases for service recipients who may not otherwise have bank accounts. Several options may be available for opening financial inclusion accounts 210. For example, the accounts may be initiated for benefits recipients by benefits providers. Alternatively, benefits providers may provide information to benefits recipients and the benefits recipients may assume responsibility for establishing a relationship with the bank providing the financial inclusion accounts. As a further alternative, the bank providing the financial inclusion accounts may provide an offer to benefits recipients and/or to the general population of service recipients for establishing a financial inclusion account. In further embodiments of the invention, the service providers 20 may extend an invitation to selected recipients to open such an account. The service providers 20 may identify target service recipients by reviewing the payment histories of service recipients for difficulties over time to determine if recipients would benefit from establishing a financial inclusion account.

In order to initiate such a system, utilities companies or other necessities providers may approach potential customers and offer a reduced rate for implementation of the financial inclusion account system. In order to gain access to the financial inclusion accounts, companies may request information from the customer.

In embodiments of the invention, the service recipient financial institution may operate as an information broker by providing necessary account information to the service recipient account holders. Additionally, the service providers will be required to subscribe with the service provider financial institution and have eligibility confirmed.

The service recipient account holders may then provide the information to the applicable necessities providers. In embodiments of the invention, the necessities providers may require a periodic deposit amount from the service recipients into the necessities sub-account in order to allow service recipient participation in the reduced-rate program.

For the service recipients, the enrollment process may take any number of forms, but would likely be initiated by a paper transaction. Similarly, while most transactions may be performed electronically, known paper-based methods may also be implemented.

Although the system is shown as including benefits providers, service recipients who don't receive benefits from the benefits providers may also be eligible to participate in the reduced-rate program. Necessities providers can identify problem customers without knowing if the customers are benefit recipients.

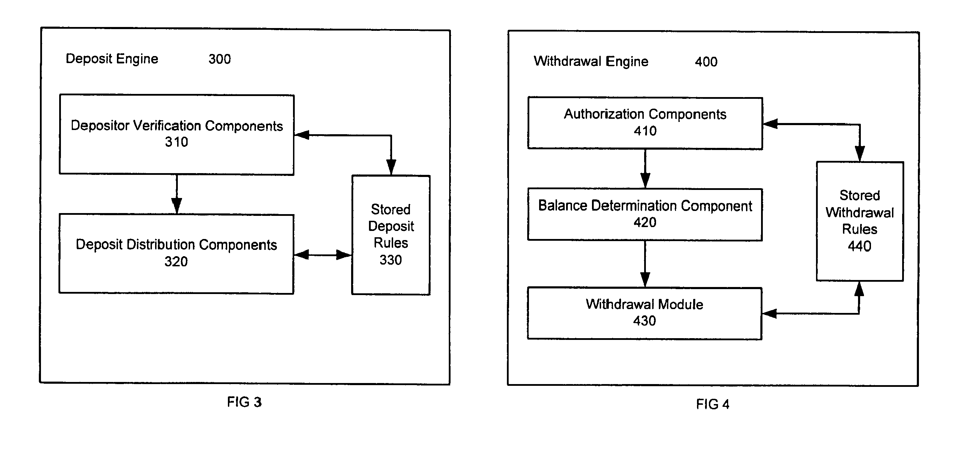

FIG. 3 is a block diagram illustrating a deposit engine 300 of the financial inclusion account system 200 in accordance with an embodiment of the invention. The deposit engine 300 may include depositor verification components 310, deposit distribution components 320, and stored deposit rules 330. In operation, the depositor verification components 310 may access stored deposit rules 330. Additionally, the deposit distribution components 320 may access the stored deposit rules 330 in order to determine appropriate distribution of deposited funds.

The depositor may for example be an employer that deposits payroll checks to the account holders account. Alternatively, the account holder may be the depositor. As a further alternative, the depositor may be a government agency or other benefits provider providing direct deposit of benefits. As yet an additional possibility, the depositor may be an individual or corporate entity transferring a payment for an item purchased from the account holder or for a debt owed to the account holder.

The depositor verification components 310 may ascertain the identity of the depositor. When establishing the account, the account holder may determine, based on the identity of the depositor, what percentage or amount of the deposited funds should be credited to the main account balance and what percentage or amount of the deposited funds should be credited to the necessities sub-account balance. For example, in the case of a government depositor, the account holder may determine that 100% of the deposited funds may be allocated to the necessities sub-account. In some embodiments, the financial institution and/or service provider may encourage direct deposit to the necessities sub-account and may in some instances provide incentives for depositing a larger percentage of funds in the necessities sub-account. Furthermore, the deposit distribution components 320 may be pre-configured to execute periodic transfers from the main account balance to the sub-account balance. Such transfers may be set up by the account holder when the account is opened.

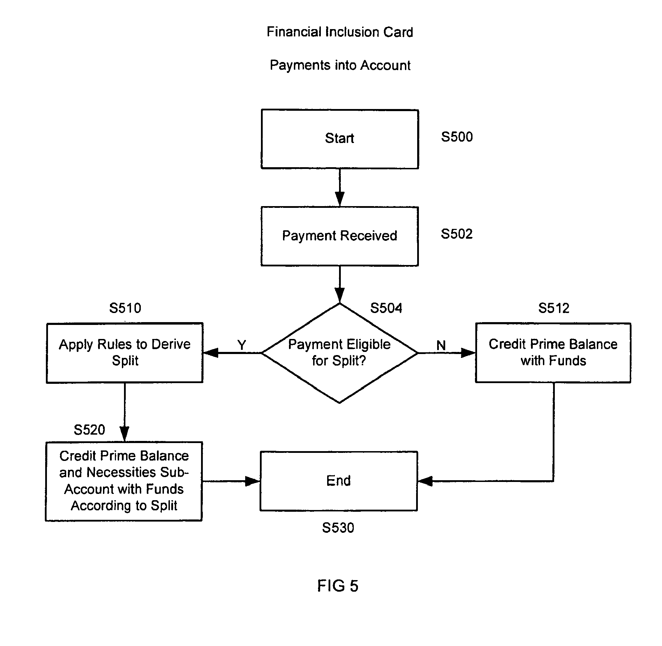

FIG. 5 is flow chart illustrating a method for making deposits into a financial inclusion account in accordance with an embodiment of the invention. The method begins in S500 and a deposit is received in S502. In S504, the financial account management system 200 determines if the deposit is eligible to be split between the main account and the necessities sub-account. If the payment is not eligible to be split in S504, the financial account management system credits the main account balance with the funds in S512. If the deposit is eligible for the split in S504, the system applies stored rules to determine the appropriate split in S510. In S520, the financial account management system credits the main account and the necessities sub-account in accordance with the determined split.

FIG. 4 is a block diagram illustrating a withdrawal engine 400 of the financial inclusion account system 200 in accordance with an embodiment of the invention. The withdrawal engine 400 may include authorization components 410, balance determination component 420, withdrawal module 430, and stored withdrawal rules 440. In operation, the authorization components 410 may consult stored withdrawal rules 440 to determine if the party requesting withdrawal is an approved debit requestor. As set forth above, in embodiments of the invention, an approved debit requestor must both be deemed eligible by the service recipient financial institution and be authorized by the service recipient account holder in order to become an approved debit requestor. Balance determination component 420 may determine if sufficient balance exists in the necessities sub-account in order to satisfy the withdrawal request. The withdrawal module 430 may withdraw the requested amount or a determined alternative account based on the stored withdrawal rules 440.

In embodiments of the invention, sub-account funds can be removed only by the account holder and by approved direct debit requestors through the direct debit process. The sub-account funds may be associated with a unique address accessible only to these approved debit requestors. The unique address of the sub-account may be achieved through the use of a unique account number or alternatively, the account number may be the same as the main account number, but a separate unique identifier may be provided.

As set forth above, in embodiments of the invention, withdrawal from the necessities sub-account is regulated both by eligibility as determined by the financial institution, and authorization, as determined by the account holder. Thus, in order to create stored withdrawal rules 440, the eligibility list of the financial institution may be reconciled with an authorization list for each account holder to create a unique set of withdrawal rules for each account holder.

In an alternative embodiment, the eligibility list created by the financial institution and the authorization list created by the account holder remain as separate lists, thus creating a two-tiered filter. In this embodiment, upon each deposit request, the withdrawal engine determines if the debit requestor is on both lists. Unless the debit requestor is on both lists, the debit requestor will be unable to withdraw funds from the necessities sub-account.

In alternative embodiments of the invention, the withdrawal rules 440 may be based solely on the eligibility determination made by the financial institution. In this embodiment, eligible service providers are entitled to withdraw from the necessities sub-account without explicit account holder authorization. Thus, when setting up the account, the account holder is made aware of the identities of eligible direct debit requests.

If insufficient funds are available in the necessities sub-account, the withdrawal module 430 may be required by the withdrawal rules 440 to withdraw additional funds from the main balance, or alternatively to reject the request for withdrawal of additional funds.

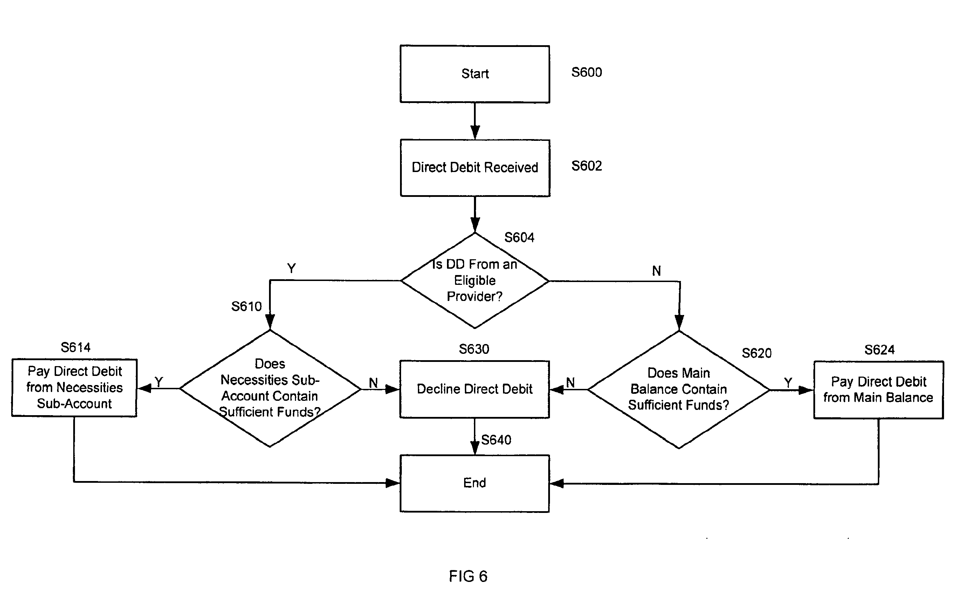

FIG. 6 is a flow chart illustrating a method for paying direct debits from the financial inclusion account in accordance with an embodiment of the invention. The method begins in S600 and a direct debit request is received in S602. In S604, the financial account management system determines if the direct debit request is from an eligible and/or authorized provider.

If in S604, if the system determines that the direct debit request is not from an eligible and/or authorized provider, the system further determines whether the main account balance includes sufficient funds in S620. If the main account balance contains sufficient funds to satisfy the direct debit request in S620, then the request is satisfied through payment in S624. If the main balance does not contain sufficient funds to satisfy the request in S620, the direct debit request is declined in S630. As set forth above, alternative embodiments may decline the ineligible debit requestor transaction without checking the main balance.

If in S604, the direct debit request came from an eligible and/or authorized provider, the financial management system determines in S610 whether the necessities sub-account contains sufficient funds to satisfy the request. If the necessities sub-account does not contain sufficient funds in S610, the system declines the direct debit in S630. Alternatively, in other embodiments, the system may check the main balance for satisfaction of the debit request. If the necessities sub-account contains sufficient funds in S610, the direct debit request is satisfied from the necessities sub-account in S614.

In alternative embodiments of the invention, if the necessities sub-account does not include sufficient funds to satisfy the request, then the request for a withdrawal may be denied.

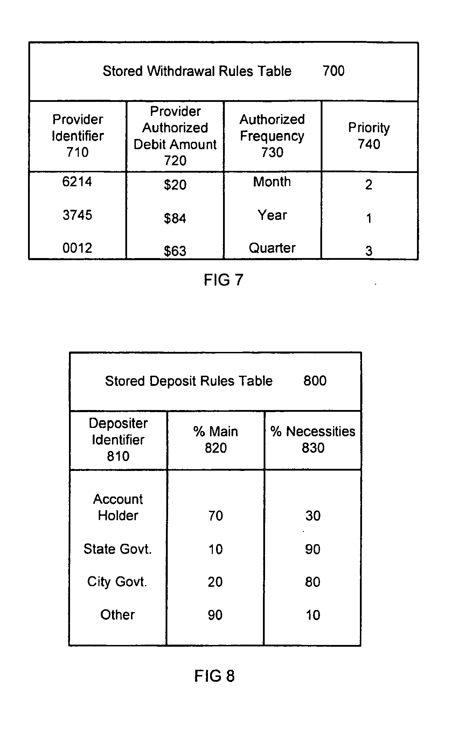

FIG. 7 is a diagram illustrating a stored withdrawal rule table 700 in accordance with an embodiment of the invention. As explained above with respect to FIG. 4, withdrawal rules may be created based on eligibility as determined by the financial institution and based on authorization as determined by the account holder. In embodiments of the invention, the withdrawal engine 400 preferably includes or consults with such a table prior to allowing a direct debit transaction. The stored withdrawal rules table 700 may include a provider identifier 710, a provider authorized debit amount 720, an authorized debit frequency 730, and optionally, a provider priority 740. Unless a provider is both eligible and authorized, the provider's identifier will not appear on the stored withdrawal rules table 700. In embodiments of the invention, instead of a debit amount 720, a percentage may be provided for determining an amount to be drawn from the sub-account. In such embodiments, the remaining amount could be withdrawn from the main account.

FIG. 8 is block diagram illustrating a stored deposit rule table 800 in accordance with an embodiment of the invention. The stored deposit rule 800 may include a depositor identifier 810 for each depositor, a percentage of funds to be deposited in the main account at 820, and a percentage of funds to deposited in the necessities sub-account at 830. As an alternative to percentages, specific authorized deposit and withdrawal amounts may be stored.

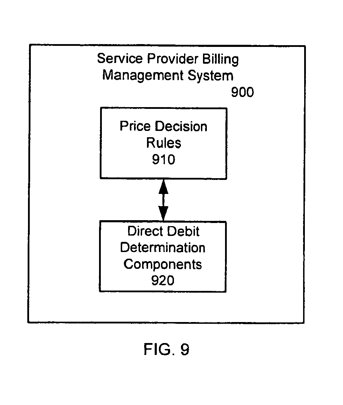

FIG. 9 is a block diagram illustrating a service provider billing management system in accordance with an embodiment of the invention. The service provider may redetermine the debit amount based on whether the requested direct debit is approved. Thus, a service provider billing management system 900 may include price decision rules 910 interacting with direct debit determination components 920.

The components shown in FIGs 1-4 and 7-9 above may be or include a computer or multiple computers. Although the components are shown as discrete units, all components may be interconnected or combined. The components may be described in the general context of computer-executable instructions, such as program modules, being executed by one or more computers to perform the procedures shown in the appended flowcharts as well as other procedures described herein. Generally, program modules include routines, programs, objects, components, data structures, etc. that perform particular tasks or implement particular abstract data types.

Those skilled in the art will appreciate that the invention may be practiced with various computer system configurations, including hand-held wireless devices such as mobile phones or PDAs, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote computer storage media including memory storage devices.

The computer system may include a general purpose computing device in the form of a computer including a processing unit, a system memory, and a system bus that couples various system components including the system memory to the processing unit.

Computers typically include a variety of computer readable media that can form part of the system memory and be read by the processing unit. By way of example, and not limitation, computer readable media may comprise computer storage media and communication media. The system memory may include computer storage media in the form of volatile and/or nonvolatile memory such as read only memory (ROM) and random access memory (RAM). A basic input/output system (BIOS), containing the basic routines that help to transfer information between elements, such as during start-up, is typically stored in ROM. RAM typically contains data and/or program modules that are immediately accessible to and/or presently being operated on by processing unit. The data or program modules may include an operating system, application programs, other program modules, and program data. The operating system may be or include a variety of operating systems such as Microsoft Windows® operating system, the Unix operating system, the Linux operating system, the Xenix operating system, the IBM AIX™ operating system, the Hewlett Packard UX^{™} operating system, the Novell Netware^{™} operating system, the Sun Microsystems Solaris™ operating system, the OS/2™ operating system, the BeOS™ operating system, the Macintosh™® operating system, the Apache^{™} operating system, an OpenStep^{™} operating system or another operating system of platform.

At a minimum, the memory includes at least one set of instructions that is either permanently or temporarily stored. The processor executes the instructions that are stored in order to process data. The set of instructions may include various instructions that perform a particular task or tasks, such as those shown in the appended flowcharts of FIGs. 5 and 6. Such a set of instructions for performing a particular task may be characterized as a program, software program, software, engine, module, component, mechanism, or tool. The financial inclusion account system 200 may include a plurality of software processing modules stored in a memory as described above and executed on a processor in the manner described herein. The program modules may be in the form of any suitable programming language, which is converted to machine language or object code to allow the processor or processors to read the instructions. That is, written lines of programming code or source code, in a particular programming language, may be converted to machine language using a compiler, assembler, or interpreter. The machine language may be binary coded machine instructions specific to a particular computer.

Any suitable programming language may be used in accordance with the various embodiments of the invention. Illustratively, the programming language used may include assembly language, Ada, APL, Basic, C, C++, COBOL, dBase, Forth, FORTRAN, Java, Modula-2, Pascal, Prolog, REXX, and/or JavaScript for example. Further, it is not necessary that a single type of instruction or programming language be utilized in conjunction with the operation of the system and method of the invention. Rather, any number of different programming languages may be utilized as is necessary or desirable.

Also, the instructions and/or data used in the practice of the invention may utilize any compression or encryption technique or algorithm, as may be desired. An encryption module might be used to encrypt data. Further, files or other data may be decrypted using a suitable decryption module.

The computing environment may also include other removable/nonremovable, volatile/nonvolatile computer storage media. For example, a hard disk drive may read or write to nonremovable, nonvolatile magnetic media. A magnetic disk drive may read from or writes to a removable, nonvolatile magnetic disk, and an optical disk drive may read from or write to a removable, nonvolatile optical disk such as a CD ROM or other optical media. Other removable/nonremovable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The storage media are typically connected to the system bus through a removable or non-removable memory interface.

The processing unit that executes commands and instructions may be a general purpose computer, but may utilize any of a wide variety of other technologies including a special purpose computer, a microcomputer, mini-computer, mainframe computer, programmed micro-processor, micro-controller, peripheral integrated circuit element, a CSIC (Customer Specific Integrated Circuit), ASIC (Application Specific Integrated Circuit), a logic circuit, a digital signal processor, a programmable logic device such as an FPGA (Field Programmable Gate Array), PLD (Programmable Logic Device), PLA (Programmable Logic Array), RFID processor, smart chip, or any other device or arrangement of devices that is capable of implementing the steps of the processes of the invention.

It should be appreciated that the processors and/or memories of the computer system need not be physically in the same location. Each of the processors and each of the memories used by the computer system may be in geographically distinct locations and be connected so as to communicate with each other in any suitable manner. Additionally, it is appreciated that each of the processor and/or memory may be composed of different physical pieces of equipment.

A user may enter commands and information into the computer through a user interface that includes input devices such as a keyboard and pointing device, commonly referred to as a mouse, trackball or touch pad. Other input devices may include a microphone, joystick, game pad, satellite dish, scanner, voice recognition device, keyboard, touch screen, toggle switch, pushbutton, or the like. These and other input devices are often connected to the processing unit through a user input interface that is coupled to the system bus, but may be connected by other interface and bus structures, such as a parallel port, serial port, game port or a universal serial bus (USB).

One or more monitors or display devices may also be connected to the system bus via an interface. In addition to display devices, computers may also include other peripheral output devices, which may be connected through an output peripheral interface. The computers implementing the invention may operate in a networked environment using logical connections to one or more remote computers, the remote computers typically including many or all of the elements described above.

Various networks may be implemented in accordance with embodiments of the invention, including a wired or wireless local area network (LAN) and a wide area network (WAN), wireless personal area network (PAN) and other types of networks. When used in a LAN networking environment, computers may be connected to the LAN through a network interface or adapter. When used in a WAN networking environment, computers typically include a modem or other communication mechanism. Modems may be internal or external, and may be connected to the system bus via the user-input interface, or other appropriate mechanism. Computers may be connected over the Internet, an Intranet, Extranet, Ethernet, or any other system that provides communications. Some suitable communications protocols may include TCP/IP, UDP, or OSI for example. For wireless communications, communications protocols may include Bluetooth, Zigbee, IrDa or other suitable protocol. Furthermore, components of the system may communicate through a combination of wired or wireless paths.

Thus, in accordance with embodiments of the invention, a computer-implemented system and method are provided for facilitating efficient savings management and payment for necessities.

While particular embodiments of the invention have been illustrated and described in detail herein, it should be understood that various changes and modifications might be made to the invention without departing from the scope and intent of the invention.

From the foregoing it will be seen that this invention is one well adapted to attain all the ends and objects set forth above, together with other advantages, which are obvious and inherent to the system and method. It will be understood that certain features and sub-combinations are of utility and may be employed without reference to other features and sub-combinations. This is contemplated and within the scope of the appended claims.

## Claims

1. A computer-implemented financial inclusion account system provided by a financial institution for facilitating payments between system participants, the system participants including account holder service recipients and eligible necessities service providers, the system comprising:
at least one financial inclusion account maintaining funds for an account holder service recipient, the financial inclusion account including a main account having a main account balance and at least one sub-account having a sub-account balance, the at least one sub-account storing funds for payment to at least one eligible necessities service provider;
withdrawal rules stored in a memory, the withdrawal rules including identification of at least one approved debit requester for withdrawing funds from the sub-account balance, the withdrawal rules requiring approved debit requesters to be debit requestors designated by the financial institution as eligible necessities service providers; and
a withdrawal engine for accessing the stored withdrawal rules upon receiving a debit request, the withdrawal engine causing the sub-account balance to be debited if the debit requestor is an approved debit requestor according to the stored withdrawal rules.

2. The system of claim 1, further comprising a deposit engine for depositing funds to each sub-account balance.

3. The computer-implemented financial inclusion account system of claim 2 further comprising:
a financial inclusion account management system for managing the at least one financial inclusion account, the management system comprising a withdrawal engine; and
a deposit engine,
the deposit engine accessing stored deposit rules in order to determine a main balance deposit amount of a submitted deposit to credit to the main balance and a sub-account deposit amount of the submitted deposit to credit to the sub-account.

4. The system of any preceding claim, wherein the withdrawal rules define approved debit requestors as debit requestors deemed eligible necessities providers by the service recipient financial institution to execute direct debit requests from the sub-account balance, or as debit requestors authorized by the service recipient account holder to execute direct debit requests from the sub-account balance, or both.

5. The system of claim 2 or claim 3, wherein the deposit engine comprises depositor verification components, the depositor verification components accessing stored deposit rules to verify depositor identity.

6. The system of claim 5, wherein the deposit engine further comprises deposit distribution components for distributing a deposit amount to the sub-account balance based on the stored deposit rules.

7. The system of claim 5, wherein the stored deposit rules further comprises a provider authorized debit percentage for allocating to the sub-account balance.

8. The system of claim 1 or claim 3, wherein the withdrawal engine comprises a balance determination component for determining whether the sub-account has a sufficient balance for satisfying each debit request.

9. The system of claim 1 or claim 3, wherein the stored withdrawal rules further comprise a provider authorized debit amount associated with a provider identifier.

10. The system of claim 8, wherein the stored withdrawal rules further comprise a provider-authorized debit frequency for determining a minimum time interval for allowing debit requests from an identified debit requestor.

11. A computer-implemented financial inclusion account management method provided by a financial institution for facilitating payments between system participants, the system participants including account holder service recipients and eligible necessities service providers, the method comprising:
establishing at least one financial inclusion account maintaining funds for an account holder service recipient, the financial inclusion account including a main account having a main account balance and at least one sub-account having a sub-account balance, the at least one sub-account storing funds for payment to at least one eligible necessities service provider;
storing withdrawal rules in a memory, the withdrawal rules including a listing of approved debit requestors wherein approved debit requestors have been designated by the financial institution as eligible necessities service providers;
accessing the stored withdrawal rules implementing a withdrawal engine upon receiving a debit request, the withdrawal engine causing the subaccount balance to be debited if the debit requestor is an approved debit requestor.

12. The computer-implemented financial inclusion account management method of claim 11, further comprising
managing deposits and withdrawals to and from the at least one financial inclusion account,
the management of deposits comprising
storing deposit rules;
accessing the stored deposit rules upon receiving a deposit in order to determine a main balance deposit amount of a submitted deposit to credit to the main balance and a sub-account deposit amount of the submitted deposit to credit to the sub-account, and
executing the stored deposit rules to credit the submitted deposit to at least one of the main balance and the sub-account balance;
the management of withdrawals comprising;
said storing withdrawal rules and said accessing the stored withdrawal rules.

13. The method of claim 11 or claim 12, further comprising defining approved debit requestors as debit requestors deemed eligible necessities providers by the service recipient financial institution to execute direct debit requests from the sub-account balance, or as debit requestors authorized by the service recipient account holder to execute direct debit requests from the sub-account balance, or both.

14. The method of claim 11, further comprising implementing a deposit engine for depositing funds to each sub-account balance.

15. The method of claim 12 or claim 14, further comprising accessing stored deposit rules to verify depositor identity with depositor verification components.

16. The method of claim 15, wherein the deposit engine distributes a deposit amount to the sub-account balance based on the stored deposit rules using deposit distribution components.

17. The method of claim 15, further comprising determining a provider authorized debit percentage for allocating to the sub-account balance.

18. The method of claim 11 or claim 12, further comprising determining whether the sub-account has a sufficient balance for satisfying each debit request implementing a balance determination component.

19. The method of claim 11, further comprising defining a provider authorized debit amount associated with a provider identifier in the stored withdrawal rules.

20. The method of claim 18, further comprising defining a provider-authorized debit frequency in the stored withdrawal rules for determining a minimum time interval for allowing debit requests from an identified debit requestor.
